# EUROPÄISCHE PATENTSCHRIFT

(11) **EP 0 847 356 B1**
(45) Veröffentlichungstag und Bekanntmachung des Hinweises auf die Patenterteilung: **14.07.1999**
(21) Anmeldenummer: 96929299.4
(22) Anmeldetag: 21.08.1996
(51) Int. Cl.: B62J 9/00

(54) **BEHÄLTER-SET**
CONTAINER SET
JEU DE CONTENANTS

(30) Priorität: 29.08.1995 DE 19531836
(43) Veröffentlichungstag der Anmeldung: 17.06.1998
(73) Patentinhaber: NUTTO, Uwe, 79100 Freiburg (DE)
(72) Erfinder: NUTTO, Uwe, 79100 Freiburg (DE)
(74) Vertreter: Schmitt, Hans, Dipl.-Ing.
(86) Internationale Anmeldenummer: EP9603683
(87) Internationale Veröffentlichungsnummer: WO9708044

(56) Entgegenhaltungen:
- EP-A- 0 413 106
- EP-A- 0 477 010
- DE-A- 4 242 211
- US-A- 3 786 972

## Beschreibung

Die Erfindung betrifft ein Behälter-Set mit zumindest zwei Behältern, die jeweils an wenigstens einer ihrer Außenseiten mindestens ein hakenförmiges Befestigungselement zum Befestigen der Behälter an einer Haltestange, einem Haltebügel oder dergleichen Haltevorrichtung aufweisen, wobei wenigstens ein Sperriegel vorgesehen ist, der in seiner Ruhelage die Haltevorrichtung in der Halteöffnung sichert.

Man kennt bereits Fahrrad-Packtaschen der eingangs erwähnten Art, die im Bereich ihrer oberen Taschenöffnung rückseitig jeweils zwei hakenförmige Befestigungselemente aufweisen, die an einem horizontalen stangen- oder rohrförmigen Teilbereich eines Fahrrad-Gepäckträgers einhakbar sind. Jeder dieser Befestigungselemente weist einen gegen eine Rückstellkraft ausschwenkbaren Sperriegel auf, der jeweils im Bereich der Hakenöffnung angeordnet ist. Beim Einhaken der Befestigungselemente am Fahrrad-Gepäckträger werden die Sperriegel vom horizontalen Teilbereich des Gepäckträgers gegen eine Rückstellkraft in ihre Offenstellung ausgeschwenkt, um sich anschließend wieder in die Ruhelage zu bewegen, in welcher die Sperriegel den horizontalen Teilbereich des Gepäckträgers in der Hakenöffnung der Befestigungselemente sichern.

Bei den vorbekannten Fahrrad-Packtaschen sind die Sperriegel der beiden Befestigungselemente über einen Tragegriff miteinander verbunden, so daß beim Ziehen am Tragegriff auch die Sperriegel in ihre Offenstellung bewegt werden.

Die vorbekannten Fahrrad-Packtaschen sind bequem an einem Fahrrad-Gepäckträger zu befestigen. Da sie aber ebenso leicht vom Gepäckträger wieder gelöst werden können, besteht beim Abstellen des Fahrrades die Gefahr, daß die Packtaschen auch von unberechtigten Personen abgenommen und entwendet werden. Der Besitzer der Packtaschen kann diese jedoch auf Dauer nur schwer und unbequem mit sich führen.

Man hat auch bereits Zweirad-Packtaschen geschaffen, die zu einem Rucksack miteinander verbindbar sind (DE-PS 42 42 211.6). Diese vorbekannten Zweirad-Packtaschen werden über Schnellspanner oder dergleichen Befestigungselemente miteinander verbunden, was trotz der vergleichsweise einfachen Handhabbarkeit doch noch einen gewissen Zeitaufwand erfordert.

Es besteht daher die Aufgabe, ein Behälter-Set der eingangs erwähnten Art zu schaffen, das möglichst vielseitig einsetzbar und bequem handhabbar ist.

Die erfindungsgemäße Lösung dieser Aufgabe besteht bei dem Behälter-Set der eingangs erwähnten Art, daß die Behälter wahlweise an der Haltevorrichtung befestigbar oder miteinander verbindbar sind und daß dazu an verschiedenen Behältern jeweils paarweise einander zugeordnete Befestigungselemente vorgesehen sind, von denen jeweils ein erstes Befestigungselement ein in die Halteöffnung des zweiten Befestigungselementes passendes und vom Sperriegel des zweiten Befestigungselements zumindest bereichsweise hintergreifbares Befestigungsgegenstück hat.

Die Behälter des erfindungsgemäßen Behälter-Sets weisen jeweils zumindest ein hakenförmiges Befestigungselement auf, wobei die Befestigungselemente beispielsweise an einem als Halterohr dienenden stangen- oder rohrförmigen Teilbereich des Fahrzeug-Gepäckträgers einhängbar und fixierbar sind. Möglich ist auch, daß am Gepäckträger zusätzlich oder stattdessen Haltebügel vorstehen, die den Behältern als Haltevorrichtung dienen. Zur Befestigung der Behälter kann die Haltevorrichtung aber auch andernorts befestigt sein. An den verschiedenen Behältern sind paarweise einander zugeordnete Befestigungselemente vorgesehen, von denen jeweils ein erstes Befestigungselement ein in die Halteöffnung des zweiten Befestigungselementes passendes und vom Sperriegel des zweiten Befestigungselementes zumindest bereichsweise hintergreifbares Befestigungsgegenstück hat. Bei Bedarf, bspw. beim Abstellen des Fahrzeuges, können also die Behälter vom Gepäckträger gelöst werden, um an dem Befestigungsgegenstück, welches an dem ersten Befestigungselement des einen Behälters vorgesehen ist, das zweite Befestigungselement eines anderen Behälters einzuhaken. Die auf diese Weise miteinander verbundenen Behälter können vom Besitzer bequem mitgeführt werden, wobei der Zusammenbau des erfindungsgemäßen Behälter-Sets nur ein Einhängen der Befestigungselemente und somit wenig Aufwand erfordert.

Die Behälter des erfindungsgemäßen Behälter-Sets können beispielsweise als Boxen, Schalen oder auch als Körbe ausgebildet sein. Besonders vorteilhaft ist es jedoch, wenn die Behälter als Packtaschen ausgebildet sind, wobei eine Ausführungsform bevorzugt wird, bei der die als Packtaschen ausgebildeten Behälter zumindest eine Packtaschenöffnung haben, die mittels eines Deckels öffen- und verschließbar ist.

Um dem Besitzer das Mitführen des erfindungsgemäßen Behälter-Sets noch zusätzlich zu erleichtern, ist es vorteilhaft, wenn zumindest ein Behälter als Rucksack ausgebildet ist und/oder wenn die Behälter zu einem Rucksack miteinander verbindbar sind und wenn dazu zumindest an einem dieser Behälter wenigstens ein Tragegurt befestigt oder lösbar befestigbar ist.

So kann der Tragegurt beispielsweise schlaufenförmig ausgebildet sein und an seinem Schlaufenende einen Haltering haben, welcher in eines der Befestigungselemente einhakbar ist. Möglich ist auch, daß der Tragegurt an seinen beiden freien Enden jeweils einen Haltering hat, wobei diese Halteringe in zwei voneinander beabstandete Befestigungselemente einhakbar sind.

Die Behälter des erfindungsgemäßen Behälter-Sets sind nach dem Einhängen am Gepäckträger ohne weiteres gesichert, wenn zumindest ein, gegen eine Rückstellkraft ausschwenkbarer Sperriegel vorgesehen ist.

Die einfache Handhabbarkeit des erfindungsgemäßen Behälter-Sets beim Einhängen der Behälter aneinander oder am Halterohr wird begünstigt, wenn zumindest ein, jeweils im Bereich der Halteöffnung eines hakenförmigen Befestigungselementes angeordneter Sperriegel vorgesehen ist.

Das Befestigungselement kann vergleichsweise flach ausgebildet werden, wenn die Sperriegel an dem ihnen jeweils zugeordneten Befestigungselement in Einführöffnung vor dessen Halteöffnung schwenkbar gelagert sind. Bei dieser Ausführungsform kann nämlich die Schwenkachse im Montagebereich des Befestigungselements angeordnet werden.

Eine andere Ausführungsform gemäß der Erfindung sieht vor, daß die Sperriegel an dem ihnen jeweils zugeordneten Befestigungselement in Einführrichtung hinter dessen Halteöffnung schwenkbar gelagert sind. Bei solch einem, ebenfalls haken- oder U-förmigen Befestigungselement kann die Schwenkachse des Sperriegels im Bereich des Querstegs der U-Form angeordnet werden. Der Sperriegel läßt sich bei dieser Ausführungsform besonders leicht in seine Offenstellung bewegen.

Eine vorteilhafte Weiterbildung gemäß der Erfindung sieht vor, daß an jedem Behälter zumindest ein Tragegriff vorgesehen ist, welcher an dem Sperriegel wenigstens eines Befestigungselementes angreift und daß bei einer Belastung oder Relativbewegung des Tragegriffs in die dem Behälter abgewandte Richtung der Sperriegel aus seiner Ruhelage in eine Offenstellung ausschwenkbar ist. Zieht man also beispielsweise am Tragegriff, um den Behälter vom Gepäckträger zu lösen, wird gleichzeitig auch der Sperriegel aus seiner Ruhelage in die Offenstellung bewegt, in der das Befestigungselement nicht mehr am Gepäckträger gesichert ist und dementsprechend leicht von dessen stangen- oder rohrförmigen Teilbereich abgezogen werden kann.

Um ein störendes Verrutschen und Wackeln der Behälter am Gepäckträger zu verhindern, ist es vorteilhaft, wenn die Befestigungselemente jeweils an einem in horizontaler Richtung orientierten Teilbereich des Gepäckträgers angreifen und wenn die Behälter mittels einer Rutschsicherung in horizontaler Richtung im wesentlichen unverrückbar am Gepäckträger gehalten sind.

Dabei sieht eine Ausführungsform gemäß der Erfindung vor, daß zumindest zwei, auf dem Teilbereich des Gepäckträgers verstellbare oder auf diesen Teilbereich aufklipsbare und dazu bereichsweise offene Anschlagringe als Rutschsicherung vorgesehen sind, die beidseits von zumindest einem Befestigungselement den Schiebeweg des Behälters in horizontaler Richtung begrenzen.

Möglich ist aber auch, daß jeder Behälter über zumindest zwei Befestigungselemente am Gepäckträger gehalten ist und daß diese Befestigungselemente in ihrem vorzugsweise horizontalen Abstand zueinander verstellbar sind. Da der horizontale Teilbereich des Gepäckträgers nämlich beidseits in Richtung zum Sattelrohr oder zur Hinterradachse abgewinkelt ist, können die Befestigungselemente in ihrem horizontalen Abstand zueinander an die Länge des horizontalen Teilbereiches des Gepäckträgers derart angepaßt werden, daß ein Rutschen des Behälters am Gepäckträger nicht mehr möglich ist. Der Behälter kann dank seiner verstellbaren Befestigungselemente somit praktisch an jeden beliebigen Gepäckträger angepaßt und montiert werden.

Dabei sieht eine besonders vorteilhafte Ausführungsform gemäß der Erfindung vor, daß zumindest ein Behälter außenseitig wenigstens eine Führungsschiene hat, an der wenigstens zwei Befestigungselemente verstellbar und festlegbar gehalten sind.

Die Behälter des erfindungsgemäßen Behälter-Sets lassen sich besonders einfach an einem Gepäckträger befestigen, wenn die Behälter zumindest zwei, in Einsteckrichtung voneinander beabstandete hakenförmige Befestigungselemente aufweisen und wenn beim Montieren der Behälter am Gepäckträger das untere Befestigungselement (die unteren Befestigungselemente) zuerst mit dem Gepäckträger in Eingriff bringbar ist (sind). Somit werden zunächst die unteren Befestigungselemente mit dem Gepäckträger in Eingriff gebracht, bevor auch die oberen Befestigungselemente an einem weiteren, ebenfalls horizontalen Teilbereich des Gepäckträgers befestigt werden können. Um das untere Befestigungselement oder die unteren Befestigungselemente zuerst mit dem Gepäckträger in Eingriff bringen zu können, kann beispielsweise vorgesehen sein, daß die Halteöffnung des unteren Befestigungselementes durch einen im Vergleich zum oberen Befestigungselement längeren freien Endbereich begrenzt ist.

Zwar ist es möglich, daß die Behälter des erfindungsgemäßen Behälter-Sets nur an ihrem oberen Randbereich wenigstens ein Befestigungselement aufweisen. Sind jedoch an den Behältern auch untere Befestigungselemente vorgesehen, so ist es vorteilhaft, wenn am Gepäckträger zumindest ein Befestigungsgegenstück zum Einhängen des unteren Befestigungselementes eines Behälter angeordnet ist. Dieses Befestigungsgegenstück kann beispielsweise auch die Befestigungspunkte zum Befestigen des Gepäckträgers am Fahrzeug aufweisen.

Eine Weiterbildung gemäß der Erfindung von eigener schutzwürdiger Bedeutung sieht vor, daß das erste Befestigungselement zwei voneinander beabstandete Haltehaken hat, die über einen als Befestigungsgegenstück ausgebildeten Quersteg miteinander verbunden sind. Dabei ist der Abstand der Haltehaken so gewählt, daß zwischen diese Haltehaken das zweite Befestigungselement mit seinem freien Endbereich paßt. Somit kann das zweite Befestigungselement in den Quersteg des ersten Befestigungselements eingehakt werden, wobei das zweite Befestigungselement zwischen den Haltehaken des ersten Befestigungselements Platz findet.

Möglich ist aber auch, daß das erste Befestigungselement einen beidseits über das Befestigungselement vorstehenden und als Befestigungsgegenstück ausgebildeten Quersteg hat, der vorzugsweise am freien Endbereich des Befestigungselementes angeordnet ist und insbesondere das freie Hakenende bildet. Eine solche Ausführungsform gemäß der Erfindung kann vergleichsweise flach ausgebildet werden.

Die Behälter des erfindungsgemäßen Behälter-Sets können an jedem beliebigen Fahrzeug, zum Beispiel an einem Auto oder einem Motorrad, montiert werden. Bevorzugt wird jedoch eine Ausführungsform, bei der die Behälter des Behälter-Sets als Zweirad-Packtaschen ausgebildet sind.

Eine besonders vorteilhafte Ausführungsform gemäß der Erfindung sieht dabei vor, daß das Behälter-Set aus vier Zweirad-Packtaschen gebildet ist, von denen die Packtaschen eines ersten Packtaschen-Paares rückseitig miteinander verbindbar sind und von denen die Packtaschen eines zweiten Packtaschen-Paares jeweils auf der Oberseite und an der Unterseite des ersten Packtaschen-Paares befestigbar sind.

Nachstehend wird die Erfindung anhand verschiedener Ausführungsbeispiele noch näher erläutert.

Es zeigt:
- **Fig. 1**: eine zu einem Packtaschen-Set zugehörige Packtasche in einer perspektivischen Darstellung, die mittels Befestigungselementen an einem Zweirad-Gepäckträger lösbar befestigbar ist,
- **Fig. 2**: eines der Befestigungselemente der Packtasche aus Fig. 1,
- **Fig. 3**: eines der Befestigungselementes einer anderen Packtasche, das zum Zusammenfügen der Packtaschen mit dem in Fig. 2 dargestellten Befestigungselement lösbar verbindbar ist,
- **Fig. 4**: die miteinander verbundenen Befestigungselemente aus Fig. 2 und 3 in einer perspektivischen Darstellung,
- **Fig. 5**: zwei Packtaschen in einer perspektivischen Darstellung, die mittels der in Fig. 2 und 3 dargestellten Befestigungselemente zu einem Packtaschen-Set miteinander verbindbar sind,
- **Fig. 6**: ein aus vier miteinander verbindbaren Packtaschen zusammenfügbares Packtaschen-Set in einer auseinandergezogenen Darstellung,
- **Fig. 7**: zwei in horizontaler Richtung verstellbare Befestigungs- elemente einer Packtasche, wobei die Befestigungselemente jeweils einen Sperriegel zum Sichern der Packtasche an einem Gepäckträger aufweisen,
- **Fig. 8**: zwei ebenfalls an einer Führungsschiene verstellbar gehaltene Befestigungselemente, ähnlich denen aus Fig. 7, wobei die hier dargestellten Befestigungselemente keinen Sperriegel haben und
- **Fig. 9**: zwei Befestigungselemente, die einander paarweise zugeordnet und an verschiedenen Packtaschen vorgesehen sind.

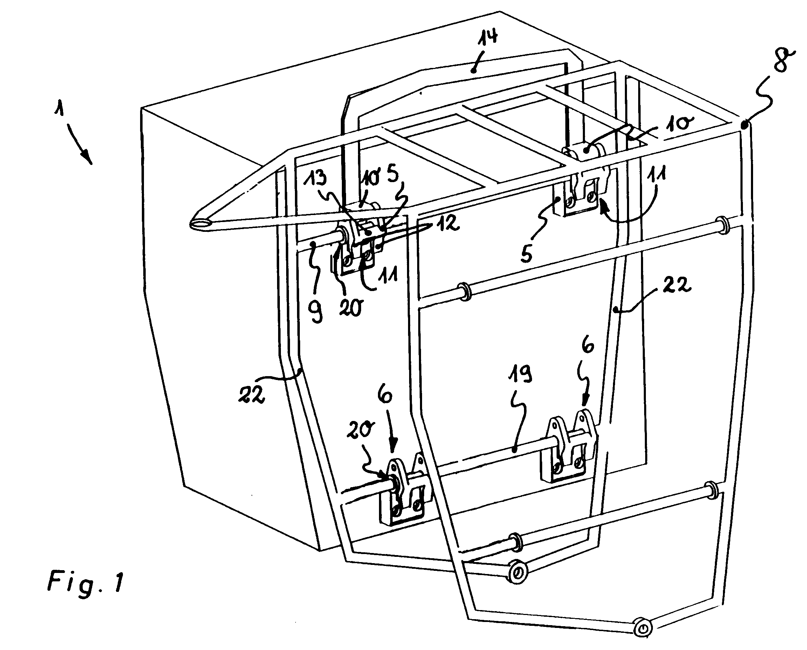

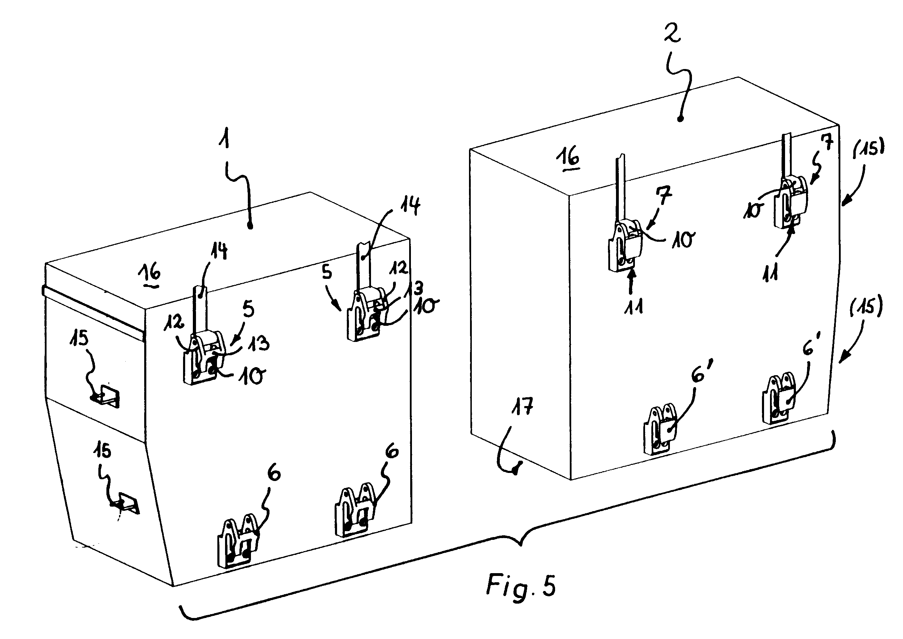

In den Figuren 1, 5 und 6 sind mehrere Behälter 1, 2, 3 und 4 dargestellt, die hier als Zweirad-Packtaschen ausgebildet sind. Jeder der Behälter 1, 2, 3 und 4 weist an einer seiner Außenseiten, vorzugsweise an seiner Rückseite, mehrere Befestigungselemente auf, mit denen die Behälter wahlweise an einem Gepäckträger befestigbar oder miteinander verbindbar sind.

Wie aus Fig. 1 deutlich wird, weist beispielsweise der Behälter 1 vier Befestigungselemente 5, 6 auf, die an zwei voneinander beabstandeten und stangen- oder rohrförmig ausgebildeten Teilbereichen eines Gepäckträgers 8 angreifen, welche hier als Haltestange dienen. Dabei weisen die am oberen Teilbereich des Gepäckträgers 8 gehaltenen Befestigungselemente 5 jeweils einen Sperriegel 10 auf, der in seiner Ruhelage den stangen- oder rohrförmigen Teilbereich 9 des Gepäckträgers in der Halteöffnung 11 der Befestigungselemente 5 sichert.

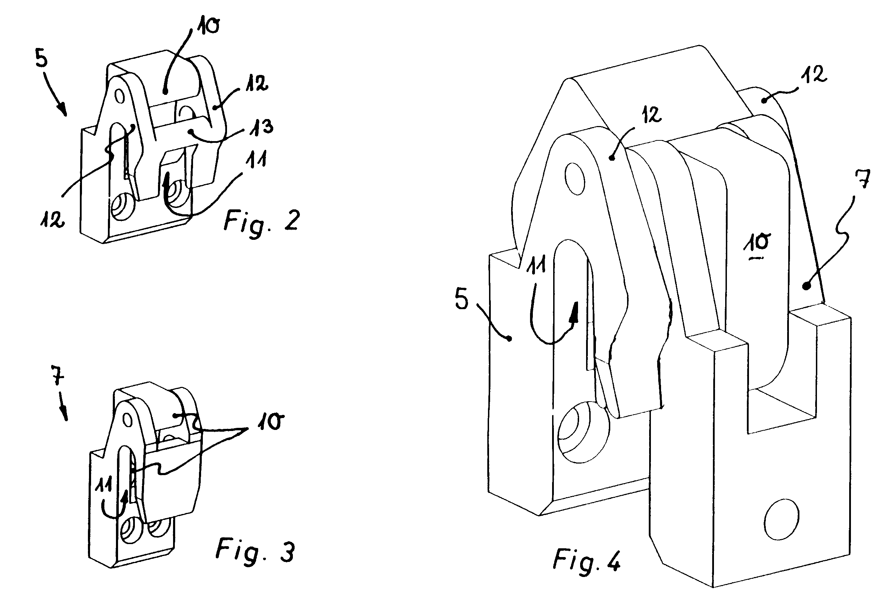

Die Befestigungselemente 5 des Behälters 1 sind in Fig. 2 näher dargestellt. Wie in Fig. 2 zu erkennen ist, weist das Befestigungselement 5 zwei voneinander beabstandete Haltehaken 12 auf, die über einen Quersteg 13 miteinander verbunden sind. Dabei ist der Sperriegel 10 an dem ihm zugeordneten Befestigungselement 5 in Einführrichtung hinter dessen Halteöffnung 11 an den Haltehaken 12 schwenkbar gelagert.

Wie aus Fig. 4 deutlich wird, ist jedes der Befestigungselemente 5 mit seinem Quersteg 13 in die Halteöffnung 11 eines Befestigungselementes 7 einsetzbar, das an einer anderen Packtasche 2 außenseitig angebracht ist. Das ebenfalls hakenförmige Befestigungselement 7 gemäß Fig. 3 ist an seinem freien Hakenende ausreichend schmal ausgebildet, um zwischen die Haltehaken 12 des Befestigungselementes 5 zu passen. Auch das Befestigungselement 7 weist einen gegen eine Rückstellkraft in eine Offenstellung ausschwenkbaren Sperriegel 10 auf, der in der in Fig. 4 dargestellten Befestigungsposition der Befestigungselemente 5, 7 den Quersteg 13 des Befestigungselements 5 hintergreift.

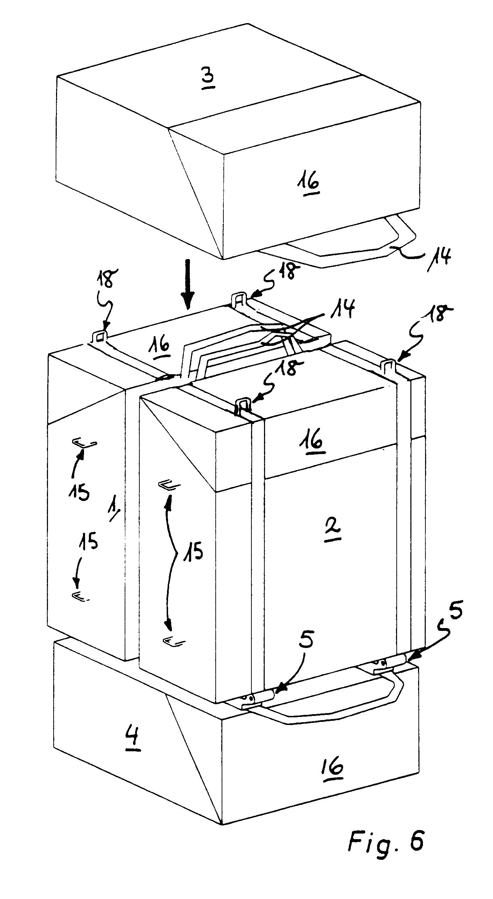

Wie aus Fig. 6 deutlich wird, ist an jeder der Packtaschen 1, 2, 3 und 4 jeweils ein Tragegriff 14 vorgesehen. Die Tragegriffe 14 greifen mit ihren Griffenden jeweils an dem Sperriegel 10 der Befestigungselemente 5 an. Beim Abnehmen der Behälter 1, 2, 3 und 4 vom Gepäckträger 8 oder beim Lösen dieser Packtaschen voneinander wird jeder Tragegriff 14 derart belastet und in eine dem jeweiligen Behälter 1, 2, 3 oder 4 abgewandte Richtung bewegt, daß auch die Sperriegel 10 in ihre Offenstellung verschwenkt werden. Durch Ziehen an den Tragegriffen 14 können somit die Sperriegel 10 entsichert und die Packtaschen 1, 2, 3 und 4 vom Gepäckträger 8 oder voneinander gelöst werden.

Während die jeweils an einem oberen Teilbereich 9 des Gepäckträgers 8 angreifenden Befestigungselemente 5, 7 mittels der Sperriegel 10 am Gepäckträger 8 gesichert sind, ist ein solcher Sperriegel 10 an den jeweils unteren Befestigungselementen 6, 6' der Behälter nicht vorgesehen. Mit Ausnahme des fehlenden Sperriegels 10 stimmen die Befestigungselemente 6, 6' in ihrem Aufbau jedoch mit den Befestigungselememten 5 beziehungsweise 7 praktisch überein. Es kann lediglich zweckmäßig sein, daß die unteren Befestigungselemente 6, 6' einen im Vergleich zu den oberen Befestigungselementen 5, 7 längeres freies Hakenende haben, so daß die Behälter 1, 2, 3 und 4 zunächst mit ihren unteren Befestigungselementen 6, 6' am Gepäckträger 8 befestigt werden, bevor die oberen Befestigungselemente 5, 7 an dem oberen Teilbereich 9 des Gepäckträgers 8 in Eingriff kommen.

Die Packtaschen 1, 2, 3 und 4 sind zu einem Rucksack miteinander verbindbar. Die gemäß Fig. 6 miteinander verbundenen Packtaschen 1, 2 weisen dazu an ihren benachbarten Seitenränden jeweils zwei in vertikaler Richtung voneinander beabstandete Einhängeösen 15 auf, an denen ein Schulter- oder Tragegurt befestigt werden kann. Statt der Einhängeösen 15 kann aber auch jeweils ein Befestigungselement 5, 6 oder 7 vorgesehen sein, wobei eine mit dem Tragegriff 14 fest verbundene Einhängeöse in den Befestigungselementen 5 oder 7 mittels der Sperriegel 10 gesichert werden kann.

Das in Fig. 6 dargestellte Behälter-Set ist aus vier Zweirad-Packtaschen gebildet, von denen die Packtaschen 1, 2 eines ersten Packtaschen-Paares rückseitig miteinander verbindbar sind und von denen die Packtaschen 3, 4 eines zweiten Packtaschen-Paares jeweils auf der Oberseite und an der Unterseite des ersten Packtaschen-Paares befestigbar sind. Dabei kann das erste Packtaschen-Paar beispielsweise an einem Hinterrad-Gepäckträger montiert werden, während das zweite Packtaschen-Paar für einen Vorderrad-Gepäckträger vorgesehen ist.

In Figur 6 ist angedeutet, daß die Packtaschen 1, 2 sowohl auf ihrem Taschen-Deckel 16 als auch an ihrem Taschenboden 17 jeweils zwei von einander beabstandete Einhängeösen 18 haben, an denen die Befestigungselemente der Packtaschen 3, 4 angreifen können.

Während die unteren Befestigungselemente 6, 6' an den Behältern 1, 2 keinen Sperriegel 10 haben, ist es zweckmäßig, wenn ein solcher Sperriegel 10 auch an den am oberen und unteren Randbereich der Behälter 3, 4 angeordneten Befestigungselementen 5 beziehungsweise 7 vorgesehen ist, um eine möglichst feste Verbindung der Packtaschen 1, 2, 3 und 4 zu erreichen.

Eine feste Verbindung der Packtaschen 1, 2, 3 und 4 sowie eine einfache Handhabung des hier dargestellten Packtaschen-Sets läßt sich noch begünstigen, wenn die Befestigungselemente 5, 6, 6' und 7 an einer im wesentlichen formstabilen und vorzugsweise ausgesteiften Behälter-Außenwand vorgesehen sind.

Um ein störendes Verrutschen der an einem Gepäckträger 8 befestigten Behälter 1, 2, 3 und 4 zu vermeiden ist es vorteilhaft, wenn diese Behälter mittels einer Rutschsicherung in horizontaler Richtung im wesentlichen unverrückbar am Gepäckträger gehalten sind. Wie in Figur 1 angedeutet ist, können dazu Anschlagringe 20 als Rutschsicherung vorgesehen sein, die jeweils auf einem der horizontalen Teilbereiche 9, 19 des Gepäckträgers 8 verstellbar gehalten sind und auf beiden Seiten der Befestigungselemente 5, 6 den Schiebeweg des Behälters 1 in horizontaler Richtung begrenzen.

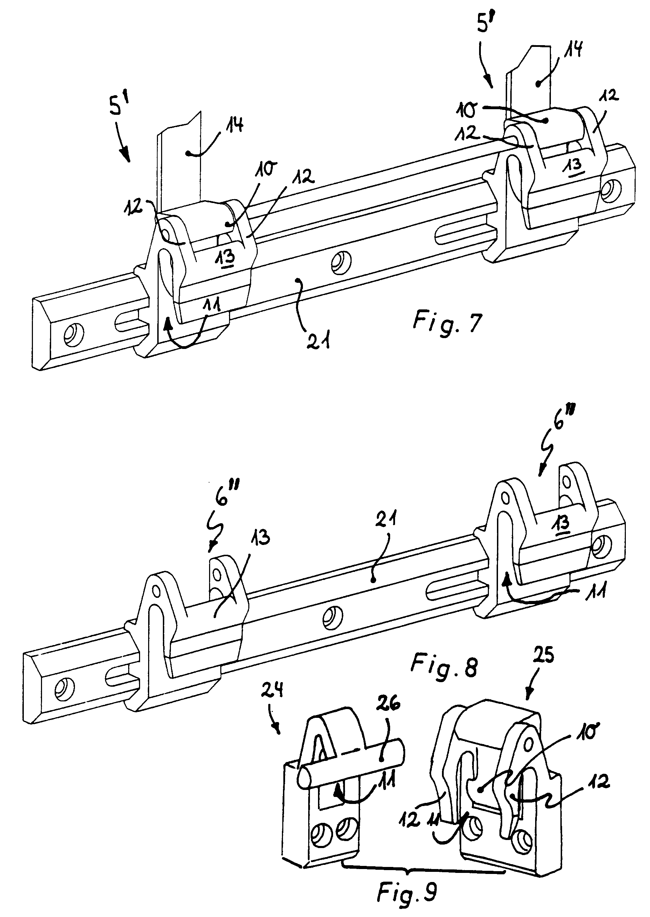

Wie aus Fig. 7 deutlich wird, ist aber auch möglich, daß jeder Behälter über zumindest zwei Befestigungselemente 5' am Gepäckträger gehalten ist, die an einer gemeinsamen Führungsschiene 21 in ihrem horizontalen Abstand zueinander verstellbar sind. Diese verstellbaren Befestigungselemente 5' können somit an die Länge des horizontalen Teilbereiches 9, 19 angepaßt werden, der beidseits jeweils mit einem Vertikalsteg 22 des Gepäckträgers 8 verbunden ist.

Ähnlich wie in Figur 1 können auch die dem unteren Teilbereich 19 des Gepäckträgers 8 zugeordneten Befestigungselemente 6'', die ähnlich wie die Befestigungselemente 5' ausgebildet und ebenfalls an einer Führungsschiene 21 verstellbar gehalten sind, ohne einen Sperriegel 10 ausgestaltet sein.

In Figur 9 sind zwei weitere Befestigungselemente 24, 25 dargestellt, von denen ein erstes Befestigungselement 24 einen beidseits über das Befestigungselement 24 seitlich vorstehenden und als Befestigungsgegenstück ausgebildeten Quersteg 26 hat, der das freie Hakenende des Befestigungselementes 24 bildet. Der Quersteg 26 des ersten Befestigungselementes 24 bildet ein Befestigungsgegenstück für ein zweites Befestigungselement 25, welches an einer anderen Packtasche vorgesehen ist. Das zweite Befestigungselement 25 hat zwei voneinander beabstandete Haltehaken 12, die an den seitlich vorstehenden Endbereichen des Quersteges 26 angreifen können. In der miteinander verbundenen Haltestellung der Befestigungselemente 24, 25 hintergreift der am gabelförmigen Befestigungselement 25 vorgesehene und vorzugsweise ebenfalls gegen eine Rückstellkraft in eine Offenstellung ausschwenkbare Sperriegel 10 den Quersteg 26 des ersten Befestigungselementes 24. Die Befestigungselemente 24, 25 sind hakenförmig ausgebildet und können somit wahlweise ebenfalls miteinander oder einzeln an einem Gepäckträger befestigt werden.

## Patentansprüche

1. Behälter-Set mit zumindest zwei Behältern (1, 2, 3, 4), die jeweils an wenigstens einer ihrer Außenseiten mindestens ein hakenförmiges Befestigungselement (5, 7, 24, 25) zum Befestigen der Behälter (1, 2, 3, 4) an einer Haltestange, einem Haltebügel oder dergleichen Haltevorrichtung aufweisen, wobei wenigstens ein Sperriegel (10) vorgesehen ist, der in seiner Ruhelage die Haltevorrichtung in der Halteöffnung (11) sichert, **dadurch gekennzeichnet,** daß die Behälter (1, 2, 3, 4) wahlweise an der Haltevorrichtung oder am Halterohr befestigbar oder miteinander verbindbar sind und daß dazu an verschiedenen Behältern (1, 2, 3, 4) jeweils paarweise einander zugeordnete Befestigungselemente (5, 7; 24, 25) vorgesehen sind, von denen jeweils ein erstes Befestigungselement (5, 24) ein in die Halteöffnung (11) des zweiten Befestigungselementes (7, 25) passendes und vom Sperriegel (10) des zweiten Befestigungselements (7, 25) zumindest bereichsweise hintergreifbares Befestigungsgegenstück (13, 26) hat.

2. Behälter-Set nach Anspruch 1, dadurch gekennzeichnet, daß die Behälter (1, 2, 3, 4) als Packtaschen ausgebildet sind.

3. Behälter-Set nach Anspruch 1 oder 2, dadurch gekennzeichnet, daß die als Packtaschen (1, 2, 3, 4) ausgebildeten Behälter zumindest eine Packtaschenöffnung aufweisen, die mittels eines Deckels (16) öffen- und verschließbar ist.

4. Behälter-Set nach einem der Ansprüche 1 bis 3, dadurch gekennzeichnet, daß zumindest ein Behälter (1, 2, 3, 4) als Rucksack ausgebildet ist und/oder daß die Behälter (1, 2, 3, 4) zu einem Rucksack miteinander verbindbar sind und daß dazu zumindest an einem dieser Behälter (1, 2, 3, 4) wenigstens ein Tragegurt befestigt oder lösbar befestigbar ist.

5. Behälter-Set nach einem der Ansprüche 1 bis 4, dadurch gekennzeichnet, daß der (die) Tragegurt(e) an wenigstens einem Befestigungselement lösbar gehalten ist (sind).

6. Behälter-Set nach einem der Ansprüche 1 bis 5, dadurch gekennzeichnet, daß zumindest ein, gegen eine Rückstellkraft ausschwenkbarer Sperriegel (10) vorgesehen ist.

7. Behälter-Set nach einem der Ansprüche 1 bis 6, dadurch gekennzeichnet, daß zumindest ein jeweils im Bereich der Halteöffnung (11) eines hakenförmigen Befestigungselementes (5, 7, 24, 25) angeordneter Sperriegel (10) vorgesehen ist.

8. Behälter-Set nach einem der Ansprüche 1 bis 7, dadurch gekennzeichnet, daß die Sperriegel (10) an dem ihnen jeweils zugeordneten Befestigungselement in Einführrichtung vor dessen Halteöffnung schwenkbar gelagert sind.

9. Behälter-Set nach einem der Ansprüche 1 bis 7, dadurch gekennzeichnet, daß die Sperriegel (10) an dem ihnen jeweils zugeordneten Befestigungselement (5, 7; 24, 25) in Einführrichtung hinter dessen Halteöffnung (11) schwenkbar gelagert sind.

10. Behälter-Set nach einem der Ansprüche 1 bis 9, dadurch gekennzeichnet, daß an jedem Behälter (1, 2, 3, 4) zumindest ein Tragegriff (14) vorgesehen ist, welcher an dem Sperriegel (10) wenigstens eines Befestigungselements (5, 7, 24, 25) angreift und daß bei einer Belastung oder Relativbewegung des Tragegriffes (14) in die dem Behälter (1, 2, 3, 4) abgewandte Richtung der Sperriegel (10) aus seiner Ruhelage in eine Offenstellung ausschwenkbar ist.

11. Behälter-Set nach einem der Ansprüche 1 bis 10, dadurch gekennzeichnet, daß die Befestigungselemente (5, 6, 7, 24, 25) mittels einer Rutschsicherung in Längsrichtung der Haltevorrichtung an dieser im wesentlichen unverrückbar gehalten sind.

12. Behälter-Set nach einem der Ansprüche 1 bis 11, dadurch gekennzeichnet, daß zumindest zwei auf dem Teilbereich (9, 19) eines Gepäckträgers (8) verstellbare oder auf diesen Teilbereich (9, 19) aufklipsbare und dazu bereichsweise offene Anschlagringe (20) als Rutschsicherung vorgesehen sind, die beidseits von zumindest einem Befestigungselement (5, 6) den Schiebeweg des Behälters (1) in horizontaler Richtung begrenzen.

13. Behälter-Set nach einem der Ansprüche 1 bis 12, dadurch gekennzeichnet, daß jeder Behälter (1, 2, 3, 4) über zumindest zwei Befestigungselemente (5, 6, 7, 24, 25) am Gepäckträger (8) gehalten ist und daß diese Befestigungselemente in ihrem vorzugsweise horizontalen Abstand zueinander verstellbar sind.

14. Behälter-Set nach einem der Ansprüche 1 bis 13, dadurch gekennzeichnet, daß zumindest ein Behälter außenseitig wenigstens eine Führungsschiene (21) hat, an der wenigstens zwei Befestigungselemente (5', 6'') verstellbar und festlegbar gehalten sind.

15. Behälter-Set nach einem der Ansprüche 1 bis 14, dadurch gekennzeichnet, daß die Behälter (1, 2, 3, 4) zumindest zwei in Einsteckrichtung zueinander beabstandete hakenförmige Befestigungselemente (5, 7, 24, 25; 6, 6', 6'') aufweisen und daß beim Montieren der Behälter am Gepäckträger (8) das untere Befestigungselement (6, 6', 6'') (die unteren Befestigungselemente) zuerst mit dem Gepäckträger (8) in Eingriff bringbar ist (sind).

16. Behälter-Set nach einem der Ansprüche 1 bis 15, dadurch gekennzeichnet, daß am Gepäckträger (8) zumindest ein Befestigungsgegenstück zum Einhängen des unteren Befestigungselements eines Behälters vorgesehen ist.

17. Behälter-Set nach einem der Ansprüche 1 bis 16, dadurch gekennzeichnet, daß das erste Befestigungselement (5) zwei voneinander beabstandete Haltehaken (12) hat, die über einen als Befestigungsgegenstück ausgebildeten Quersteg (13) miteinander verbunden sind.

18. Behälter-Set nach einem der Ansprüche 1 bis 16, dadurch gekennzeichnet, daß das erste Befestigungselement (24) an seinem freien Endbereich einen beidseits über das Befestigungselement (24) vorstehenden und als Befestigungsgegenstück ausgebildeten Quersteg (26) hat, der ein freies Hakenende bildet.

19. Behälter-Set nach einem der Ansprüche 1 bis 18, dadurch gekennzeichnet, daß die Behälter des Behälter-Sets als Zweirad-Packtaschen (1, 2, 3, 4) ausgebildet sind.

20. Behälter-Set nach einem der Ansprüche 1 bis 19, dadurch gekennzeichnet, daß das Behälter-Set (1, 2, 3, 4) aus vier Zweirad-Packtaschen gebildet ist, von denen die Packtaschen (1, 2) eines ersten Packtaschen-Paares rückseitig miteinander verbindbar sind und von denen die Packtaschen (3, 4) eines zweiten Packtaschen-Paares jeweils auf der Oberseite und an der Unterseite des ersten Packtaschen-Paares (1, 2) befestigbar sind.

21. Befestigungselementen-Paar zum Verbinden von zumindest zwei Behältern, **dadurch gekennzeichnet,** daß das an einem ersten Behälter (1, 2, 3, 4) außenseitig vorgesehene Befestigungselement (5, 24) einen hakenförmigen Teilbereich hat, der eine Halteöffnung (11) des Befestigungselements (5, 24) zum Befestigen an einer Haltestange, einem Haltebügel oder dergleichen Haltevorrichtung begrenzt, daß wenigstens ein Sperriegel (10) vorgesehen ist, der in seiner Ruhelage die Haltevorrichtung in der Halteöffnung (11) sichert und daß das Befestigungselement (5, 24) ein in die Halteöffnung (11) eines zugeordneten zweiten und an einem zweiten Behälter (1, 2, 3, 4) vorgesehenen Befestigungselementes (7, 25) passendes und vom Sperriegel (10) des zweiten Befestigungselementes (7, 25) zumindest bereichsweise hintergreifbares Befestigungsgegenstück (13, 26) hat, derart, daß die Behälter (1, 2, 3, 4) wahlweise an der Haltestange, am Haltebügel oder dergleichen Haltevorrichtung befestigbar oder miteinander verbindbar sind.

## Claims

1. A container set with at least two containers (1,2, 3,4), which each have, on at least one of their outer sides, at least one hook-shaped attachment element (5,7,24,25) for attachment of the container (1,2,3,4) to a holding bar, holding bracket or similar holding mechanism, wherein at least one locking latch (10) is provided which keeps the holding mechanism in the holding opening (11) in its position of rest, characterised in that the containers (1,2,3,4) can be either attached to the holding mechanism or the holding tube, or can be attached together and that to this end on different containers (1,2,3,4) attachment elements (5,7;24,25) are provided, in each case assigned to one another in pairs, of which in each case a first attachment element (5,24) has an attachment piece (13,25) which fits into the holding opening (11) of the second attachment element (7,25) and behind which the locking latch (10) of the second attachment element (7,25) can engage at least in part.

2. A container set according to claim 1, characterised in that the containers (1,2,3,4) are designed as saddle bags.

3. A container set according to claim 1 or 2, characterised in that the containers which are designed as saddle bags (1,2,3,4) have at least one saddle bag opening which can be opened and closed by means of a cover (16).

4. A container set according to claims 1 to 3, characterised in that at least one container (1,2,3,4) is designed as a rucksack and/or that the containers (1,2,3,4) can be connected together to form a rucksack and that to this end at least one carrying strap is attached or is releasably attachable to at least one of these containers (1,2,3,4).

5. A container set according to one of claims 1 to 4, characterised in that the carrying strap or carrying straps is or are releasably attached to at least one attachment element.

6. A container set according to one of claims 1 to 5, characterised in that at least one locking latch (10) is provided which can be swung out against an elastic force.

7. A container set according to one of claims 1 to 6, characterised in that at least one locking latch (10) is arranged in each case in the area of the holding opening (11) of a hook-shaped attachment element (5,7,24,25).

8. A container set according to one of claims 1 to 7, characterised in that the locking latches (10) are swivelably supported on the respective assigned attachment element in the direction of insertion in front of its holding opening.

9. A container set according to one of claims 1 to 7, characterised in that the locking latches (10) are swivelably supported on the respective assigned attachment element (5,7,24,25) in the direction of insertion behind its holding opening (11).

10. A container set according to one of claims 1 to 9, characterised in that at least one carrying handle (14) is provided on each container (1,2,3,4) which acts upon the locking latch (10) of at least one attachment element (5,7,24,25) and that the locking latch (10) can be swung out from its position of rest into an open position when the carrying handle (14) is loaded or moved relatively in the direction facing away from the container (1,2,3,4).

11. A container set according to one of claims 1 to 10, characterised in that the attachment elements (5,6,7,24, 25) are held substantially undisplaceably to the holding apparatus by means of a slip-preventing means in the longitudinal direction of said holding apparatus.

12. A container set according to one of claims 1 to 11, characterised in that at least two abutment rings (20), which can be adjusted on the partial area (9,19) of a luggage carrier (8) or which can be clipped onto this partial area (9,19), and for this purpose are open in part, are provided as slip-prevention means, which, on both sides of at least one attachment element (5,6) limit the sliding travel of the container (1) in a horizontal direction.

13. A container set according to one of claims 1 to 12, characterised in that each container (1,2,3,4) is held by at least two attachment elements (5,6,7,24,25) to the luggage carrier (8) and that these attachment elements are adjustable in their preferably horizontal distance from one another.

14. A container set according to one of claims 1 to 13, characterised in that at least one container has at least one guide rail (21) on its outer side, to which at least two attachment elements (5',6'') are held so as to be adjustable and fixable.

15. A container set according to one of claims 1 to 14, characterised in that the containers (1,2,3,4) have at least two hook-shaped attachment elements (5,7,24,25; 6,6',6''), which are at a distance from one another in the insertion direction, and that on attachment of the container to the luggage carrier (8) the lower attachment element (6,6',6''), (or the lower attachment elements) can first be brought in contact with the luggage carrier (8).

16. A container set according to one of claims 1 to 15, characterised in that at least one attachment piece for hanging the lower attachment element of a container is provided on the luggage carrier (8).

17. A container set according to one of claims 1 to 16, characterised in that the first attachment element (5) has two holding hooks (12) which are disposed at a distance from one another, which are connected to one another by a transverse web (13) which is designed as an attachment piece.

18. A container set according to one of claims 1 to 16, characterised in that the first attachment element (24) has a transverse web (26) at its free end area, which projects over the attachment element (24) at both sides and is designed as an attachment piece, and which forms a free hook end.

19. A container set according to one of claims 1 to 18, characterised in that the containers of the container set are designed as saddle bags (1,2,3,4) for two-wheeled vehicles.

20. A container set according to one of claims 1 to 19, characterised in that the container set (1,2,3,4) is formed from four saddle bags for two-wheeled vehicles, of which the saddle bags (1,2) of a first pair of saddle bags can be attached together at the back and of which the saddle bags (3,4) of a second pair of saddle bags can be attached to the upper side and the lower side of the first pair of saddle bags (1,2) respectively.

21. A pair of attachment elements for the connection of at least two containers, characterised in that the attachment element (5,24) provided on the outside of a first container (1,2,3,4) has a hook-shaped partial area which limits a holding opening (11) of the attachment element (5,24) for attachment to a holding rod, a holding bar or similar holding mechanism, that at least one locking latch (10) is provided which secures the holding apparatus in the holding opening (11) in its position of rest and that the attachment element (5,24) has an attachment piece (13,26) which fits into the holding opening (11) of an assigned second attachment element (7,25) which is provided on a second container (1,2,3,4) and behind which the locking catch (10) of the second attachment element (7,25) can engage at least in a partial area, in such a way that the containers (1,2, 3,4) can either be connected to the holding rod, the holding bar or similar holding mechanism or to one another.

## Revendications

1. Jeu de contenants, comprenant au moins deux contenants (1, 2, 3, 4) qui présentent chacun, sur au moins un de leurs côtés extérieurs, au moins un élément de fixation (5, 7, 24, 25) en forme de crochet pour la fixation des contenants (1, 2, 3, 4) sur une barre de fixation, un étrier de fixation ou un dispositif de fixation analogue, au moins un verrou (10) étant prévu, qui assujettit dans sa position de repos le dispositif de fixation dans l'ouverture de fixation (11), **caractérisé** en ce que les contenants (1, 2, 3, 4) peuvent, au choix, être fixés sur le dispositif ou tube de fixation ou être assemblés entre eux, et en ce que, à cet effet, des éléments de fixation respectifs (5, 7; 24, 25) mutuellement associés par paires sont prévus sur les différents contenants (1, 2, 3, 4), parmi lesquels un premier élément respectif de fixation (5, 24) possède une partie complémentaire de fixation (13, 26), pouvant passer dans l'ouverture de fixation (11) du deuxième élément de fixation (7, 25) et derrière laquelle peut s'engager au moins sectoriellement le verrou (10) du deuxième élément de fixation (7, 25).

2. Jeu de contenants selon la revendication 1, **caractérisé** en ce que les contenants (1, 2, 3, 4) sont réalisés sous forme de sacoches.

3. Jeu de contenants selon la revendication 1 ou 2, **caractérisé** en ce que les contenants réalisés sous forme de sacoches (1, 2, 3, 4) présentent au moins une ouverture de sacoche, qui peut être ouverte et fermée au moyen d'un couvercle (16).

4. Jeu de contenants selon une des revendications 1 à 3, **caractérisé** en ce qu'au moins un contenant (1, 2, 3, 4) est réalisé sous forme de sac à dos, et/ou en ce que les contenants (1, 2, 3, 4) peuvent être mutuellement assemblés pour former un sac à dos et en ce que, à cet effet, au moins une sangle porteuse est fixée ou peut être fixée de manière amovible sur au moins un des ces contenants (1, 2, 3, 4).

5. Jeu de contenants selon une des revendications 1 à 4, **caractérisé** en ce que la ou les sangles porteuses sont maintenues de manière amovible sur au moins un élément de fixation.

6. Jeu de contenants selon une des revendications 1 à 5, **caractérisé** en ce qu'il est prévu au moins un verrou (10) pouvant être écarté par pivotement à l'encontre d'une force de rappel.

7. Jeu de contenants selon une des revendications 1 à 6, **caractérisé** en ce qu'il est prévu au moins un verrou (10) respectivement disposé dans la région de l'ouverture de fixation (11) d'un élément de fixation (5, 7, 24, 25) en forme de crochet.

8. Jeu de contenants selon une des revendications 1 à 7, **caractérisé** en ce que les verrous (10) sont montés à pivotement, sur l'élément de fixation qui leur est respectivement associé, devant l'ouverture de fixation de cet élément, considéré dans la direction d'introduction.

9. Jeu de contenants selon une des revendications 1 à 7, **caractérisé** en ce que les verrous (10) sont montés à pivotement, sur l'élément de fixation (5, 7 ; 24, 25) qui leur est respectivement associé, derrière l'ouverture de fixation (11) de cet élément, considéré dans la direction d'introduction.

10. Jeu de contenants selon une des revendications 1 à 9, **caractérisé** en ce qu'au moins une poignée porteuse (14) est prévue sur chaque contenant (1, 2, 3, 4), laquelle agit sur le verrou (10) d'au moins un élément de fixation (5, 7, 24, 25), et en ce que, lors d'une sollicitation ou d'un mouvement relatif de la poignée porteuse (14) dans la direction opposée au contenant (1, 2, 3, 4), le verrou (10) peut être écarté par pivotement de sa position de repos dans une position ouverte.

11. Jeu de contenants selon une des revendications 1 à 10, **caractérisé** en ce que les éléments de fixation (5, 6, 7, 24, 25) sont, à l'aide d'un moyen antidérapant, maintenus sur le dispositif de fixation de façon essentiellement immuable dans la direction longitudinale de ce dernier.

12. Jeu de contenants selon une des revendications 1 à 11, **caractérisé** en ce qu'il est prévu, comme moyen antidérapant, au moins deux anneaux de butée (20), pouvant être déplacés sur la région partielle (9, 19) d'un porte-bagages (8) ou clipsés sur cette région partielle (9, 19), et à cet effet sectoriellement ouverts, qui délimitent de part et d'autre d'au moins un élément de fixation (5, 6) la course de coulissement du contenant (1) en direction horizontale.

13. Jeu de contenants selon une des revendications 1 à 12, **caractérisé** en ce que chaque contenant (1, 2, 3, 4) est fixé sur le porte-bagages (8) au moyen d'au moins deux éléments de fixation (5, 6, 7, 24, 25), et en ce qu'on peut régler la distance de préférence horizontale entre ces éléments de fixation.

14. Jeu de contenants selon une des revendications 1 à 13, **caractérisé** en ce qu'au moins un contenant possède sur le côté extérieur au moins une glissière de guidage (21), sur laquelle au moins deux éléments de fixation (5', 6'') sont maintenus en pouvant être déplacés et immobilisés.

15. Jeu de contenants selon une des revendications 1 à 14, **caractérisé** en ce que les contenants (1, 2, 3, 4) possèdent au moins deux éléments de fixation (5, 7, 24, 25 ; 6, 6', 6'') mutuellement distants dans la direction d'emboîtement, et en ce que, lors du montage des contenants sur le porte-bagages (8), le ou les éléments de fixation inférieurs (6, 6', 6'') peuvent être amenés en engagement en premier avec le porte-bagages (8).

16. Jeu de contenants selon une des revendications 1 à 15, **caractérisé** en ce qu'au moins une partie complémentaire de fixation est prévue sur le porte-bagages (8) pour l'accrochage de l'élément de fixation inférieur d'un contenant.

17. Jeu de contenants selon une des revendications 1 à 16, **caractérisé** en ce que le premier élément de fixation (5) possède deux crochets de fixation (12) mutuellement distants, qui sont mutuellement reliés par une branche transversale (13) conçue comme partie complémentaire de fixation.

18. Jeu de contenants selon une des revendications 1 à 16, **caractérisé** en ce que le premier élément de fixation (24) possède, dans sa région terminale libre, une branche transversale (26), dépassant de part et d'autre de l'élément de fixation (24) et conçue comme partie complémentaire de fixation, qui forme une extrémité libre en crochet.

19. Jeu de contenants selon une des revendications 1 à 18, **caractérisé** en ce que les contenants du jeu de contenants sont réalisés sous forme de sacoches (1, 2, 3, 4) de véhicule à deux roues.

20. Jeu de contenants selon une des revendications 1 à 19, caractérisé en ce que le jeu de contenants (1, 2, 3, 4) est constitué de quatre sacoches de véhicule à deux roues, parmi lesquelles les sacoches (1, 2) d'une première paire de sacoches peuvent être mutuellement assemblées sur le côté arrière, tandis que les sacoches (3, 4) d'une deuxième paire de sacoches peuvent être respectivement fixées sur le dessus et le dessous de la première paire de sacoches (1, 2).

21. Paire d'éléments de fixation pour assembler au moins deux contenants, **caractérisée** en ce que l'élément de fixation (5, 24) prévu sur le côté extérieur d'un premier contenant (1, 2, 3, 4) possède une région partielle en forme de crochet, qui délimite une ouverture de fixation (11) de l'élément de fixation (5, 24) destinée à la fixation sur une barre de fixation, un étrier de fixation ou un dispositif de fixation analogue, en ce qu'au moins un verrou (10) est prévu, qui assujettit dans sa position de repos le dispositif de fixation dans l'ouverture de fixation (11), et en ce que l'élément de fixation (5, 24) possède une partie complémentaire de fixation (13, 26), pouvant passer dans l'ouverture de fixation (11) d'un deuxième élément associé de fixation (7, 25), prévu sur un deuxième contenant (1, 2, 3, 4), et derrière laquelle peut s'engager au moins sectoriellement le verrou (10) du deuxième élément de fixation (7, 25), de telle sorte que les contenants (1, 2, 3, 4) peuvent, au choix, être fixés sur la barre de fixation, l'étrier de fixation ou le dispositif de fixation analogue, ou être assemblés entre eux.
